Europäisches Patentamt

European Patent Office

Office européen des brevets

(11) Publication number: O 171 53⬚

A1

(12) **EUROPEAN PATENT APPLICATION**

(21) Application number: 85106955.9

(22) Date of filing: 27.04.81

(51) Int. Cl.4: A 01 D 50/00

(30) Priority: 28.04.80 US 144062

(43) Date of publication of application:
19.02.86 Bulletin 86/8

(84) Designated Contracting States:
AT CH DE FR GB LI LU NL SE

(60) Publication number of the earlier application
in accordance with Art. 76 EPC: 0 053 129

(71) Applicant: EMERSON ELECTRIC CO.
8100 W. Florissant Avenue
St. Louis Missouri 63136(US)

(72) Inventor: Mitchell, Albert W.
11523 Willwood
Houston Texas 77072(US)

(74) Representative: Brereton, Paul Arthur et al,
REDDIE & GROSE 16 Theobalds Road
London WC1X 8PL(GB)

(54) Apparatus for cutting vegetation.

(57) Apparatus (11) for cutting vegetation with a rotatable head (19) carrying a non-metallic cutting line (21) extended into a cutting plane. Additional line is extended from a supply line coil (39) within the head into the cutting plane without independent operator action. A mechanism in the head automatically feeds replacement line whenever the fee end of the cutting line is reduced to less than a predetermined maximum length in the cutting plane. The cutting line length is always extended to this predetermined maximum length at all operational rotationals speeds, without adjustment, and in a positive step-by-step mode of segmental advancement. The line feeder mechanism, has an escapement cam (56) with an off center pivotal mounting (57) senses both centrifugal forces on the cutting line changes in rotary speed of the head.

Fig. 6   Fig. 7

EP 0 171 533 A1

APPARATUS FOR CUTTING VEGETATION

BACKGROUND OF THE INVENTION

This invention relates to the cutting of vegetation, and more particularly, it relates to the cutting of vegetation using a flexible, non-metallic cutting line extending from a rotating head into a cutting plane.

Various types of devices have been proposed for many years to facilitate the removal of vegetation by mowing, trimming, edging and like cutting operations. In general, these devices have employed a metal blade to effect vegetation removal. Devices of this nature employ prime movers such as electric and gasoline motors. As a result, rotating metal blades can inflict serious and terrible injury upon the user.

In the United States of America, practical vegetation cutting devices using flexible, non-metallic lines carried upon a rotating head were developed. Examples of devices are shown in U.S. Patents 3,708,967, 3,826,048, 4,052,789, 4,054,992, 4,067,108 and 4,104,797. These patented devices have met outstanding success in that these American developments provide safer electrical or gasoline-powered tools for vegetation cutting, edging and trimming operations.

The device shown in these patents employ a flexible cutting line, such as manufactured from Nylon $^R$ polymer. The cutting line is carried usually upon a stool internally of a rotating head. When desired to replenish the line or to extend an additional length of it, the rotation of the head was stopped and line manually extended from the spool. This line extension procedure in the patented devices has been found to be convenient, simple and reliable. In many of the more powerful devices, especially those powered by DC electric motors, a system to extend the cutting line from the head without interrupting cutting operations was desired.

A most desirable system would be capable of feeding cutting line as needed from the head so that line feeding is independent of operator action during grass cutting. Structures directed toward this purpose are shown in U.S. Patents 3,895,440, 4,020,550 and 4,035,915. These structures have in common a basket-weave supply of cutting line carried on the periphery of a disc with the line feeding from behind special post members. These post members have a cutting-abrading edge so that cutting line from the weave supply is bent about such edge in the free traveling end portion extending into the cutting plane. The combination function of the edge, line, angular speed, etc., is arranged so that the line posts with such edge sever the free end of the cutting line when it is worn to an ineffective length. In practice, these structures are found to waste about 25 per cent of the cutting line because of the excessive length of line severed at the post's edge, e.g., three inches.

Other line feeding structures are shown in 4,118,864 and 4,138,810. These mechanisms control spool rotation in line feeding functions by worm and spur gears having complex action in the vegetation cutting environment.

The present invention provides a rotating head with a simple mechanism that maintains the cutting line at its maximum present length in the cutting plane irrespective of rates of cutting line wear or loss and without interrupting vegetation cutting or requiring independent operator action. However, the operator can selectively activate the mechanism if additional length of cutting line extensions are desired.

SUMMARY OF THE INVENTION

In accordance with this invention, there is provided an apparatus for cutting vegetation which has a head rotatable about an axis of rotation. The head may carry in a cavity a coiled supply of a flexible non-metallic cutting line. The cutting line extends outwardly from the head through an aperture into a cutting plane. An escapement cam in a first position secures the cutting line against extension from the head when its free end is at a predetermined maximum length. The escapement lever in a second position uncoils the cutting line for extending step-by-step the cutting line through the aperture into the cutting plane. Off center pivot means swing the escapement cam from the first position to the second position, during head rotation to extend the cutting line from the aperture whenever the cutting line is shortened to less than the predetermined maximum length during the cutting of vegetation.

## DESCRIPTION OF THE DRAWINGS

Fig. 1 is a pictorial view illustrating one embodiment of the apparatus for cutting vegetation arranged according to the present invention;

Fig. 2 illustrates in enlargement the lower portion of the apparatus shown in Fig. 1;

Fig. 3 is a vertical-section, in enlargement, taken axially through the cutting head of the apparatus shown in Fig. 2;

Fig. 4 is a cross-section of the cutting head as shown in Fig. 3, taken along line 4-4;

Fig. 5 is a top plan view of the escapement cam of the cutting head shown in Fig. 3;

Fig. 6 is a cross-section taken on line 6-6 in Fig. 3 illustrating the escapement cam in a first position to prevent rotation of the spool carrying cutting line within the cutting head;

Fig. 7 is a cross-section like Fig. 6 but with the escapement cam in the second position to allow spool rotation to extend cutting line from the cutting head; and

Fig. 8 is a cross-section of the spool used in the cutting head.

In these drawings, the several embodiments have common elements of construction in the cutting head. In regard to the several figures, like elements carry like numerals to simplify description of these embodiments in description of the present apparatus.

## DESCRIPTION OF PREFERRED EMBODIMENTS

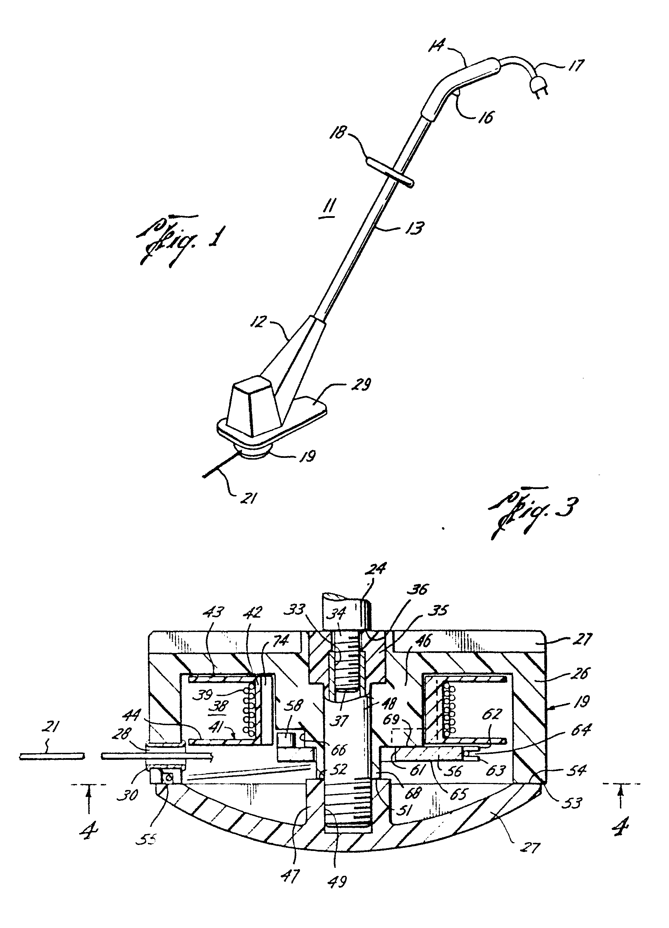

Referring to Fig. 1, there is shown an apparatus for cutting vegetation which is constructed in accordance with one embodiment of the present invention. In this particular embodiment, the apparatus is a grass trimmer 11, but it could be a lawn mower, edger or other device for vegetation cutting purposes. The trimmer 11 has a lower housing 12 interconnected by a tube 13 to a handle assembly 14. The assembly 14 provides a switch 16 for selectively applying electrical power received by a cord 17 to an electrical motor carried within the housing 12. For two-handed operation of the trimmer 11, an auxiliary handle 18 is provided upon the tube 13.

The lower housing 12 carries a head 19 rotatable about an axis
passing through the housing 12, and the cutting line 21 extends into
a cutting plane which is substantially perpendicular to the axis of
rotation of the head.

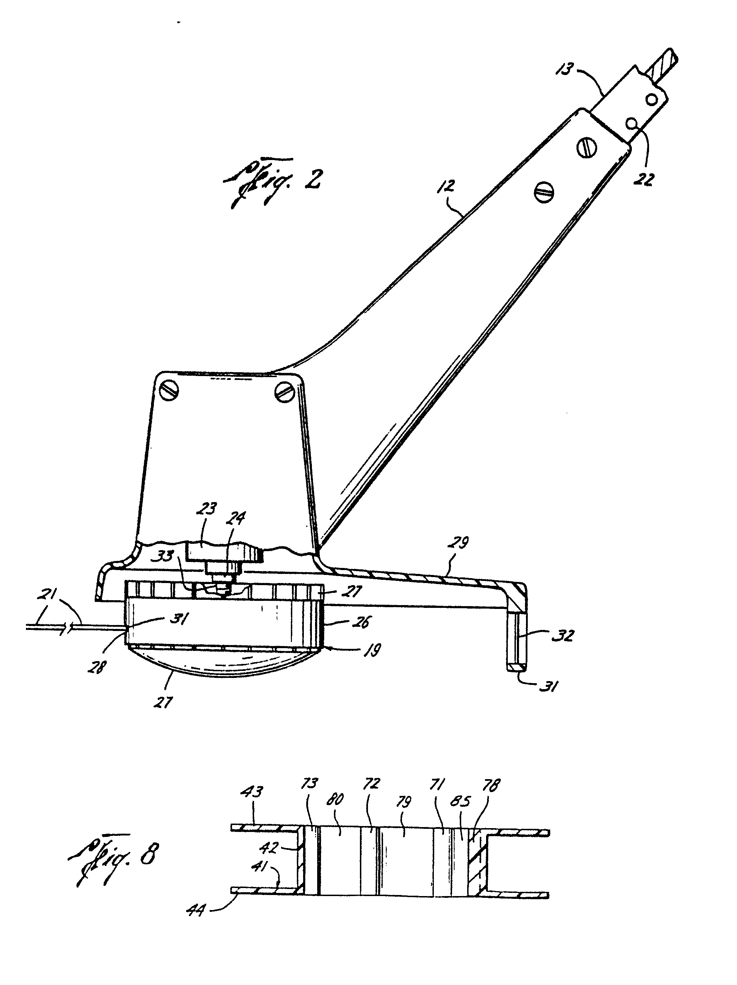

In Fig. 2 there is shown an enlargement of the housing 12
carrying a plurality of air induction openings 22 in the tube 13.
These openings introduce a flow of cooling air over the motor
contained in the housing 12. The housing 12 includes an electric
motor 23 which has a downwardly-extending drive shaft 24. The head
19 is threadedly connected to the shaft 24. The upper surface of
the head 19 may be surrounded by a plurality of vanes 27 serving as
a centrifugal blower for moving air radially outwardly from the head
19 during its rotation. As a result, the induced flow of air cools
the motor 23 within the housing 12. The head 19 includes a hub 26
and a cover 27. The hub 26 carries in its side peripheral surface
an aperture 28 through which the cutting line 21 extends radially
outwardly into the cutting plane. A metal bearing surface 30 may be
placed at the aperture to protect the line 21 against undue wear
and breakages. The cover 27 is releasably secured to the hub 26 by
a threaded connection.

The housing 12 includes a rearwardly-extending tail part 29
which serves as a protection to the user to prevent inadvertent
contact with the rotating cutting line 21. Also, the tail part
provides an automatic limit to any excessive extension of the
cutting line 21 from the head 19. More particularly, the tail part
29 has a downwardly-extending projection 31 in which is embedded a
metal cutting blade 32. As a result, the cutting line 21, when
rotated in a cutting plane by the head 19, can never have an
operating length greater than the distance from the axis of rotation
to the cutting blade 32. Any greater length of cutting line is
automatically severed by the blade 32.

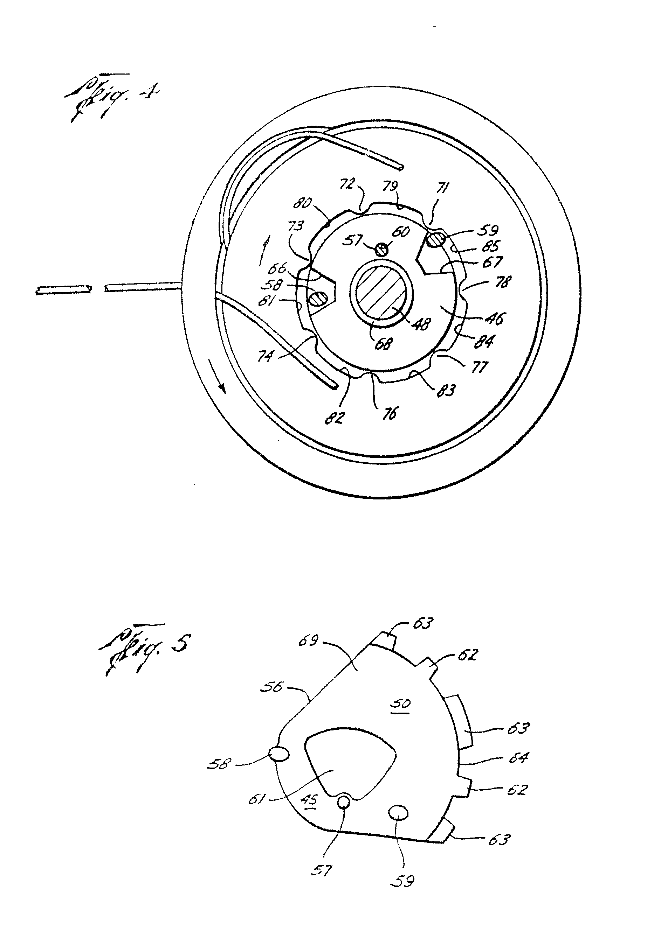

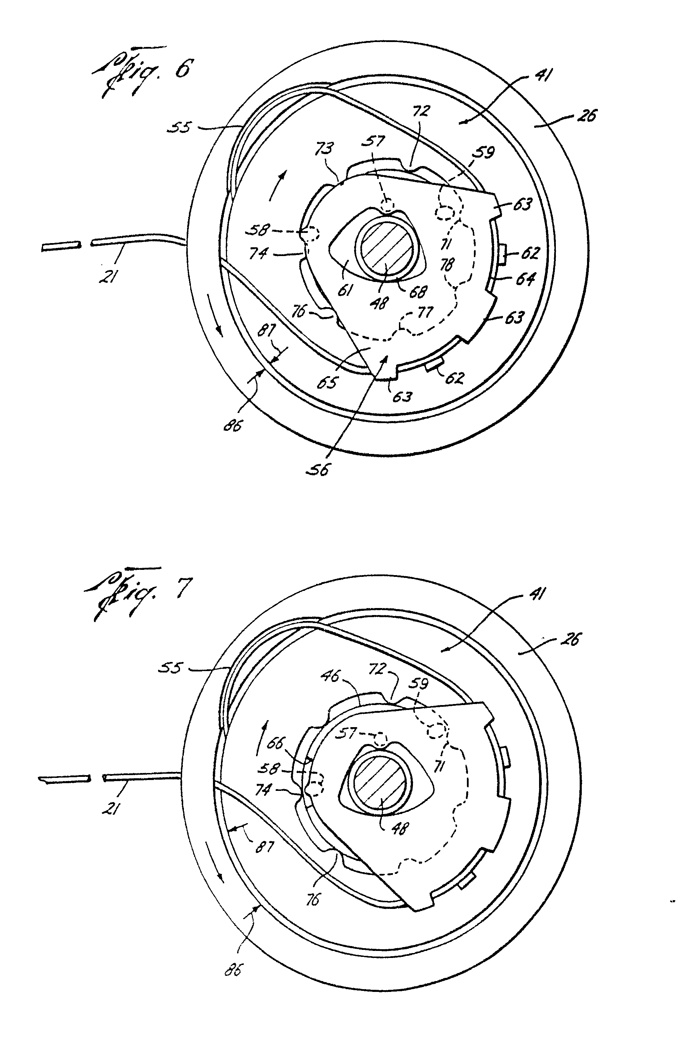

The head 19, as seen in Figs. 3-7, is disc-like with a smooth
peripheral side surface carrying the aperture 28 through which the
cutting line 21 extends into the cutting plane. If more than one
cutting line is used, each line should have a separate aperture and
bearing surface. The hub 26 one face carries an adapter 35 with an
integral metal sleeve having interior threads 33 in which the drive shaft 24 is secured by its threads 34. In addition, the adapter threads 33 extends axially a sufficient dimension in the head 19 to form a rigid and integral connection with the shaft 24. Preferably, the shaft 24 is cylindrical- with a flat circular shoulder 36 above its lower terminus 37.

The exposed external surfaces of the head 19 should be smooth in surface contour, rounded at the edges and without substantial projections and recesses capable of trapping appreciable vegetation. Preferably, the cover 27 has a smooth exposed surface, is circular in configuration with rounded corners, and is coaxially aligned with the axis of rotation of the head 19.

The hub 26 forms a cylindrical cavity 38 in cooperation with the cover 27. A supply 39 of coiled cutting line is disposed within the cavity 38. The coiled cutting line is free for uncoiling by independent rotational and axial movements within the head 19. Preferably, the coiled cutting line is carried on a spool 41 mounted for rotation within the head.

The spool has a tubular body 42 with flanges 43 and 44 defining a space receiving the supply 39 of cutting line. The spool 41 is journaled for free rotation in the head 19 by its mounting upon a cylindrical post 46 and axially secured by a post 47 carried upon the hub 26 and cover 27, respectively.

The cover 27 carries internal threads 49 which receive the threaded stud 48 formed on the lower part of the adapter 35 in the hub 26. The hub and cover have meeting surfaces 51 and 52 provided by a reduced collar 68 on post 46 and the post 47, and peripheral abutting planar surfaces 53 and 54. The cover is unthreaded for access to the cavity 38, preferably counter-directionally to head rotation to prevent unintended loosening. A series of peripheral ridges permit ready gripping of the cover for its threaded mounting on the hub.

The interior end of the coiled cutting line is secured to the spool 41. The cutting line passes from the spool 41 in a helical path through an arcuate cut 55 in the hub 26, along the line control mechanism including an escapement cam 56 and then through the aperture 28. The free end of the cutting line 21 extends outwardly of the head 19 from the aperture 28. Preferably, the coiled cutting line supply 39 is wound codirectionally to the rotation of the head during vegetation cutting. This line winding arrangement avoids backlash problems and unintended uncoiling of cutting line when rotation of the head is suddenly induced.

In accordance with this invention, a fully automatic mechanism is provided to uncoil the cutting line within the head, and to extend the cutting line through the aperture into the cutting plane when the cutting line is shortened to less than the predetermined length.

More particularly, the mechanism provides for the positive segmental line advance by a controlled rotation of the spool 41 relative to the head 19 during vegetation cutting. An important feature of the mechanism is an escapement cam that provides a step-by-step rotation of the spool by sensing centrifugal force induced on the cutting line by head rotation and the force acting on the escapement cam resulting from changes in rotary speed at the head. Also, the escapement cam uses these forces in coaction to provide a snap-action line advancement function by mounting the escapement cam upon an off center pivot.

In reference to Fig. 3-7, an escapement cam mechanism is illustrated which provides the automatic but positive incremental extension, as needed, of the cutting line. The head 19 carries the escapement cam 56 in an off center pivot mounting which provides for swinging movement between a first position (shown in Fig. 6) and a second position (shown in Fig. 7).

The escapement cam 56 has a wedge-shape with an apex 45 at its small end and an enlarged portion 50 at its other end. The term wedge-shape is intended to include not only narrow angled members, but, also cams with included angles of 90 degrees or greater. Also, the enlarged portion preferably has a peripheral arcuate edge and good results are obtained with this edge being of a curve at the radius equal to the distance from the head's axis of rotation to the edge. However, the peripheral edge can have other configurations as will be apparent from the accompanying description.

The cam 56 has a central opening 61 which mounts about the neck 68 of the post 46. As a result, the cam mounts centrally within the head and swings between first and second positions upon an off center pivot relative to the post 46. More particularly, the cam 56 carries a pivot projection 57 adjacent its apex and the projection 57 is received loosely within a hole 60 in the post 46. Since the hole 60 is spaced from the axis head rotation, the cam 56 swings eccentrically between its first and second positions.

The cam 56 also carries projecting anchor pins 58 and 59 that are spaced to each side of the pivot projection 57. These anchor pins move radially inwardly and outwardly relative to recesses 66 and 67 formed into the end surfaces of the post 46.

Preferably, the cam 56 is planar and may be constructed of a rigid material of suitable strength, such as aluminum. The anchor pins can be cast or machined into the planar body of the cam and project normally from its top surface 69. Good results are provided where the anchor pins are round but preferably, the anchor pins are oval in cross-section for smooth operation.

The enlarged portion of the cam 56 has a peripheral edge with a longitudinal groove 64 to receive the cutting line 21 in that portion extending between the spool 41 and the aperture 28. The groove 64 may have unbroken edges, but preferably, as for weight savings, the groove 64 is provided by laterally offset projections 62 and 63 to contain the cutting line. The force arising from the cutting line extending from the rotating head 19 is applied through groove 64 (as on a pulley) to move the cam 56 sideways between the first and second positions.

The enlarged portion 50 of the cam 56 also provides adjacent the groove 64 of a counterbalance mass that provides a unique function in the present head. The mass of the cam 56 at its enlarged end 50 (without the cutting line acting upon it) is arranged to function with the off center pivot mounting on projection 57 so that at normal operating rotary speeds, the cam 56 is moved into the second position, wherein the cutting line is extended stepwise in a length from the rotating head 19.

The action of the cutting line in the groove 64 is to swing the cam 56 responsive to the centrifugal force acting upon the free end of the cutting line within the cutting plane.

When the cutting line 21 is at its predetermined maximum extended length into the cutting plane, the cam 56 is swung into its first position (Fig. 6) wherein the cutting line is secured against extension or feeding additional line from the head.

When the cutting line 21 is shortened to less than the desired predetermined maximum extended length, the effective centrifugal force of the cutting line is lessened, and the cam 56 swings into its second position (Fig. 7) and a length of cutting line is extended stepwise from the rotating head 19.

The cam 56 moves with a snap-action between the first and second positions, because of the off center pivotal mounting of the cam 56 relative to the rotational axis of the head 19, the counterbalance mass, and the action of the cutting line on the cam. This positive movement between positions insures a proper and positive feeding of cutting line from the head. At no time, can the cam oscillate or hunt between the first and second positions.

Any mechanism can connect the cam 56 with the spool 41 for controlling its rotation relative to the head 19 in a stepwise fashion. Preferably, a tooth and anchor pin arrangement is used. For this purpose, the spool 41 carries a plurality of radially inward facing teeth 71-74 and 76-78. These teeth at their inner ends provide bearing surfaces about the post 46 for coaxial rotation of the spool 41 relative to the hub 26. Preferably, the teeth are axially elongated and extend the length of the tubular body 42 of the spool 41.

The teeth 71-74 and 76-78 are separated by grooves 79-85. These grooves are of sufficient depth to provide clearance to the anchor pins when in their radial outward positions. As a result, the spool rotates freely until a tooth encounters an anchor pin in its position outward from the recesses on the post 46.

The teeth are dimensional to be engaged by the anchor pins 57 and 58 when either pin is in its outward position. Of course, these teeth are disengaged by either pin when in its inward position and received within recesses 66 and 67 on the post 46. One anchor pin engages a tooth while the other pin is in the recess on the post 46.

The teeth and anchor pins are angularly positioned to cooperate as an escapement to control rotation of the spool 41 as the cam 56 is swung sideways between the first and second positions.

Referring to Fig. 6, the cam 56 is in the first position, and the anchor pin 58 engages the tooth 74 to secure the spool 41 against rotation to feed the cutting line from the head 19. At this time, the anchor pin 59 is in the recess 67.

When the cutting line 21 is shortened to less than the predetermined maximum extended length in the cutting path, the cam 56 swings into the second position as seen in Fig. 7. The anchor pin 58 has moved into the recess 66 and the spool 41 is rotated angularly until the tooth 72 in its outward position engages the anchor pin 59.

The spool rotates step-wise until the outward anchor pin stops the next approaching tooth. If the cutting line 21 has now been extended to the desired extension into the cutting plane, the cam 56 now is swung into the first position. If the cutting line is yet not fully extended, from the head 19, the cam 56 swings toward the second position sufficiently to clear the anchor pin 58 from the adjacent tooth and returns momentarily into the first position, and the cam 56 again swings between first and second positions for feeding stepwise additional lengths of cutting line from the rotating head. At this time the spool has rotated angularly a certain displacement shown by the index arrows 86 and 87. This successive feeding function of the cam 56 is the product of the off center privoted mountings in coordination with the selected counterbalance mass, and the swinging action of the cam from the centrifugal force applied to it by the extended cutting line.

The cam 56 with the counterbalance mass also has a unique function in that not only is automatic line feeding obtained without operator intervention, but additional line feed (if needed) is induced by a start-stop operation of the trimmer 11, or other certain changes in rotary speed of the head 19.

As the head 19 accelerates, the counterbalance mass reacts to swing the camn 56 into the second position, but when the cutting line is fully extended, the spool is not released for rotation because of the action of the cutting line on the cam. As the head 19 decelerates, the cam 56 is held in the first position so no feeding of the cutting line can occur. Thus, line feeding can be induced at shortened cutting line lengths by a start-stop operation of the trimmer of the head 19 while cutting vegetation. However, the counterbalance mass at the enlarged end of the cam 56 must not be too great relative to action of the cutting line on the cam because the cam would shift into the second position and feed cutting line each time the head 19 accelerates in rotary speed.

The eccentric swinging of the cam 56 provides for the anchor pins to be jammed against the teeth they engage upon the spool. The anchor pins move radially outwardly and an arc intersecting the circle defining the teeth on the spool. As a result, the spool must move slightly counterdirectionally to the direction for unwinding cutting line to release the cam for movement between the first and second positions. This unique function of the offcenter pivoted cam prevents over-feeding or ratcheting (machine-gunning) of the cam relative to the spool.

The feeding of the cutting line appears to involve some sliding of its portion contained in the groove 64. Assuming that the centrifugal force acting on the free end of the cutting line holds taut that portion of the cutting line between the groove 64 and aperture 28, then the cam 56 swinging into the second position (Fig. 7) requires the cutting line to slide in the groove 64. Stated in a different matter, the cam 56 in swinging into the second position must let the cutting line slide in the groove 64. Otherwise, the cutting line would be pulled inwardly into the head at its free end within the cutting path.

The teeth 71-74 and 76-78 are separated by grooves 79-85. These grooves are of sufficient depth to provide clearance to the anchor pins when in their radial outward positions. As a result, the spool rotates freely until a tooth encounters an anchor pin in its position outward from the recesses on the post 46.

Although the head 19 can be manufactured in various forms and of several materials, it is preferred to manufacture the hub 26 and cover 27 of plastic material, e.g., Nylon 6 polymer. The spool 41 and cutting line can be made of a similar material. The cam 56 can be made of a durable strong material, such as steel, aluminum or various metallic combinations.

Although there has been described a particular arrangement of functions and elements in the various mechanisms employed in the head of the present invention, it is not intended that this description be the only possible arrangement of these elements to produce the results of the invention. In this regard, the function and elements may be altered to produce the same results. All that is required for these elements is a mechanism which secures the line 21 from extension when at the predetermined maximum extended length in the cutting plane. Also, the mechanism must release the cutting line "as needed" when the cutting line has been reduced by wear or loss, to length less than the desired maximum length. In addition, the mechanism provides for the automatic extension of the cutting line with a few relatively simple and inexpensive escapement elements.

From the foregoing, it will be apparent that there has been provided a novel apparatus for cutting vegetation which provides a novel apparatus for cutting vegetation which provides a convenient and safe means for extending automatically cutting line without the individual attention of the operator. It will be appreciated that certain changes or alterations in the present apparatus may be made without departing from the spirit of this invention. These changes are contemplated by and are within the scope of the appended claims which define the invention. Additionally, the present description is intended to be taken as an illustration of this invention.

What is claimed is:

- 12 -

0171533

CLAIMS:

1. An apparatus (11) for cutting vegetation, comprising:

a head (19) rotatable about an axis of rotation having at least one peripheral aperture (24) and a cavity (39) providing a storage area for cutting line (21), spool means (41) mounted in said cavity and journalled therein for rotation about the rotational axis of said head, said spool means including a plurality of angularly disposed escapement teeth (71-74, 76-78), a supply (39) of flexible non-metallic cutting line disposed in a coiled portion about said spool means with one end secured thereto and with a free end extending outwardly from said head through said aperture into a cutting plane, an escapement cam (56) disposed for movement on said head and engageable with said spool means in a first position and a second position of said escapement cam relative to said head, said escapement cam being movable between said first and second positions for permitting incremental rotation of said spool means to uncoil and extend a predetermined length of cutting line (21) into said cutting plane, said escapement cam being further characterized by anchor pin means (58, 59), and in said first position said anchor pin means securing said spool means against rotation in said head when said cutting line at said free end in said cutting plane has a predetermined maximum length, said escapement cam in said second position stepping said anchor pin means between said escapement teeth on said spool means and providing for rotation of said spool means and uncoiling of said cutting line for extension from said head through said aperture into the cutting plane, and said escapement cam being mounted centrally in said head to swing about off center pivot means (58) to said second position from said first position during head rotation whenever said cutting line is shortened to less than the predetermined maximum length whereby said cutting line is extended in length during the cutting of vegetation.

2. The apparatus of Claim 1, wherein said escapement cam has a wedge-shape with said pivot means at its apex (45) and an arcuate groove (64) at its enlarged portion to engage said cutting line adjacent said aperture for sensing variations in centrifugal force exerted upon said free end of said cutting line reflecting the angular velocity of said head during rotation.

3. The apparatus of Claim 2., wherein said head includes a curved recess (55) through which said cutting line extends between said spool means and said escapement cam.

*Fig. 1*

*Fig. 3*

*Fig. 2*

13

12

22

23 24

33

27

29

21

31

27

26

19

32

28

31

27

*Fig. 8*

43

73

72

71

78

80

79

85

42

41

44

*Fig. 4*

*Fig. 5*

Fig. 6

Fig. 7

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | FR-A-2 429 550 (STIHL) <br> * Page 9, line 27 - page 13, line 17 * | 1 | A 01 D 50/00 |
| A | US-A-4 104 796 (SHELDON) <br> * Column 6, lines 13-47; figure 9 * | 1 | |
| P,A | US-A-4 236 312 (FOSTER) <br> * Claims 1,2 * | 1 | |

**TECHNICAL FIELDS SEARCHED (Int Cl 4)**

A 01 D

The present search report has been drawn up for all claims

| Place of search <br> THE HAGUE | Date of completion of the search <br> 07-08-1985 | Examiner <br> DE LAMEILLIEURE D. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82